# EUROPÄISCHE PATENTANMELDUNG

(11) **EP 1 153 883 A2**
(43) Veröffentlichungstag der Anmeldung: **14.11.2001**
(21) Anmeldenummer: 01109325.9
(22) Anmeldetag: 12.04.2001
(51) Int. Cl.: B82B 3/00, G01B 21/30

(54) **Standard für ein Nanotopographie-Gerät und Verfahren zur Herstellung des Standards**

(30) Priorität: 11.05.2000 DE 10022991; 07.09.2000 DE 10044162
(71) Anmelder: Wacker Siltronic Gesellschaft für Halbleitermaterialien Aktiengesellschaft, 84489 Burghausen (DE)
(72) Erfinder: Passek, Friedrich, Dr., 84166 Adlkofen (DE); Schauer, Reinhard, 83410 Laufen (DE); Schmolke, Rüdiger, Dr., 84489 Burghausen (DE); Kumpe, Ralf, Dr., 30900 Wedemark (DE)
(74) Vertreter: Rimböck, Karl-Heinz, Dr.

(57) **Zusammenfassung**

Gegenstand der Erfindung ist ein Standard zum Kalibrieren und Überprüfen eines Nanotopographie-Geräts, umfassend ein Substrat und mindestens eine auf dem Substrat abgeschiedene Struktur mit einer lateralen Ausdehnung von 0,5 bis 20 mm und einer vertikalen Ausdehnung von 5 bis 500 nm, die von Flanken begrenzt ist, die eine Steigung von höchstens 1*10⁻³ aufweisen. Gegenstand der Erfindung ist auch ein Verfahren zur Herstellung des Standards, wobei Material mit einer inhomogenen Abscheiderate auf dem Substrat abgeschieden wird.

## Beschreibung

Gegenstand der Erfindung ist ein Standard zum Kalibrieren und Überprüfen eines Nanotopographie-Geräts. Gegenstand der Erfindung ist auch ein Verfahren zur Herstellung eines solchen Standards.

Neue Verfahren zur Vermessung der Oberflächentopographie ermöglichen es, Höhenvariationen im Nanometerbereich aufzulösen. Daher wird in diesem Zusammenhang von Nanotopographie oder Nanotopologie gesprochen. Diese Messverfahren beginnen sich als Qualitätskontrolle insbesondere bei der Herstellung von Halbleiterscheiben zu etablieren. Allerdings wird dabei das Fehlen von Kalibrationsstandards und Prüfmitteln offensichtlich. Es stehen derzeit keine Standards zur Verfügung, mit welchen eine einheitliche Justage und Überprüfung der Meßsysteme durchgeführt werden kann. Die Schwierigkeit besteht darin, geeignete Topographiestrukturen reproduzierbar herzustellen.

Bei den Strukturen sollte es sich entsprechend des Einsatzbereiches der Messgeräte um Erhebungen oder Vertiefungen handeln, welche laterale Ausdehnungen im Bereich von 0,5 bis 20 mm und eine Höhe oder Tiefe von 10 bis 500 nm aufweisen, wobei der Übergang von einer ebenen Umgebung zu den Strukturen nicht stufenartig, sondern mit Steigungen von 5*10⁻⁶ bis 1*10⁻³ erfolgen soll.

Es ist zwar durchaus möglich, ähnliche Strukturen mit entsprechenden lateralen und vertikalen Dimensionen zu erzeugen (DE 197 09 255 A1). Deren Steigung entspricht jedoch nicht denen, die für die Nanotopographie als relevant erachtet werden. Sie werden daher von den Nanotopographie-Meßgeräten kaum oder gar nicht aufgelöst.

Bisher werden daher zur Überprüfung und zum Abgleich von Messgeräten Halbleiterscheiben aus der regulären Produktion verwendet, bei denen vermessbare Strukturen zufällig vorhanden sind. Ein Abgleich müsste aber durch Vermessen einer solchen Scheibe an allen vorhandenen Systemen erfolgen. Da die Systeme jedoch weltweit bei unterschiedlichen Nutzern verwendet werden und jede dieser Scheiben ein Unikat darstellt, ist ein globaler Abgleich nicht möglich.

Aufgabe der Erfindung ist daher, einen reproduzierbaren Standard bereitzustellen, mit dem alle Meßgeräte kalibriert und überprüft werden können.

Gegenstand der Erfindung ist ein Standard zum Kalibrieren und Überprüfen eines Nanotopographie-Geräts, umfassend ein Substrat und mindestens eine auf dem Substrat abgeschiedene Struktur mit einer lateralen Ausdehnung von 0,5 bis 20 mm und einer vertikalen Ausdehnung von 5 bis 500 nm, die von Flanken begrenzt ist, die eine Steigung von höchstens 1*10⁻³ aufweisen.

Gegenstand der Erfindung ist auch ein Verfahren zur Herstellung des Standards, bei dem Material mit einer inhomogenen Abscheiderate auf dem Substrat abgeschieden wird.

Die Erfindung ermöglicht den reproduzierbaren Zugang zu artifiziellen Strukturen, die nicht nur in ihrer lateralen und vertikalen Ausdehnung, sondern insbesondere in Bezug auf die Steigung den natürlich auf Halbleiterscheiben vorkommenden Strukturen ähnlich sind und damit von Nanotopographie-Messgeräten aufgelöst werden können. Das neue Verfahren zeichnet sich dadurch aus, daß es die wiederholbare Herstellung geeigneter nanotopographischer Strukturen und damit entsprechender Standards erlaubt. Insbesondere kann sowohl die laterale und vertikale Ausdehnung als auch die Steigung der Strukturen gezielt eingestellt werden.

Bei den Messgeräten handelt es sich um Oberflächeninspektionssysteme, welche üblicherweise mit Licht eines Lasers die Oberfläche des Prüflings (beispielsweise einer Halbleiterscheibe aus Silicium) abrastern und mit Hilfe von ortsaufgelöster Interferometrie und/oder Detektion der Ablenkung des reflektierten Lichts die Topographie vermessen. Als eine weitere Meßmethode sei auch die Profilometrie erwähnt. Die maximale laterale Auflösung dieser Systeme liegt bei einigen 100 *µ*m, während die vertikale Auflösung bei unter 1 nm liegen kann. Allerdings wird diese Auflösung erheblich durch die topographische Steigung der Strukturen bestimmt. So wird z.B. eine hohe Stufe bei senkrecht bzw. nahezu senkrechtem Lichteinfall keine signifikante Ablenkung des reflektierten Lichts verursachen und daher nicht detektiert werden. Derartig steile nanotopographische Strukturen kommen auf Halbleiterscheiben, die in grossen Stückzahlen produziert werden, nicht vor. Typische interessierende nanotopographische Strukturen auf Halbleiterscheiben haben laterale Ausdehnungen von 0,5 bis 20 mm und Höhen bzw. Tiefen von 5 bis 500 nm. Die Steigung der Strukturen liegt höchstens bei 1*10⁻³.

Entsprechend dem heutigen Kenntnisstand, werden die meisten auf Halbleiterscheiben auffindbaren Nanotopographie-Strukturen durch Abtragsprozesse bei der Scheibenherstellung verursacht. Bisherige Versuche derartige Strukturen mit Hilfe von Abtragsprozessen reproduzierbar herzustellen und als Standards einzusetzen, sind gescheitert, weil diese Prozesse im Bereich der Nanotopographie nicht mehr ausreichend kontrolliert werden können.

Gemäß der vorliegenden Erfindung werden die Strukturen nicht durch einen Abtragsprozess, sondern durch Materialaufbringung, besonders bevorzugt durch Epitaxie erzeugt.

Um die Standards zu erzeugen, werden die Strukturen auf die ebene Oberfläche eines Substrats, vorzugsweise einer Substratscheibe aufgebracht. Als Substrat können insbesondere folgende Materialien verwendet werden: Silicium, GaAs, Glas, SiC und Quarz. Besonders geeignete Substrate sind doppelseitenpolierte Halbleiterscheiben aus Silicium.

Das Substrat sollte möglichst wenige natürliche Nanotopologiestrukturen aufweisen und wenn, dann nur solche mit geringer vertikaler Ausdehnung. Darunter ist zu verstehen, dass die auf dem Substrat vorhandenen, nicht absichtlich erzeugten Strukturen um mindestens einen Faktor 5 geringere Höhen bzw. Tiefen aufweisen sollten als die erfindungsgemäß aufzubringenden Strukturen. Zum Beispiel sollte für einen Standard mit lateraler Ausdehnung von 5 mm und einer Höhe von 50 nm die auf dem Substrat vorab vorhandenen Strukturen bei ähnlicher lateraler Größe maximal Höhen um ca. 10 nm aufweisen.

Als Abscheidungsmaterial sind nahezu alle abscheidbaren Stoffe in reiner oder gemischter Form, insbesondere aber folgende geeignet: Silicium, GaAs, Germanium, Kohlenstoff, Aluminium, Kupfer, Gold, Silber, SiO₂, Si₃N₄ und Wolframsilicid. Besonders bevorzugt ist es, Silicium abzuscheiden.

Geeignete Abscheideprozesse sind: CVD (chemical vapour deposition), elektrolytische Abscheidung, Plasmabeschichtung, Aufdampfen und Epitaxie. Besonders bevorzugtes Abscheideverfahren ist die Epitaxie, insbesondere das epitaktische Abscheiden von Silicium auf einem Siliciumsubstrat.

Die Erzeugung geeigneter nanotopographischer Strukturen wird durch eine entsprechend inhomogene Abscheiderate auf der Oberfläche des Substrates bewirkt. Bei einem Epitaxieprozess mit Silicium bedeutet dies, daß die Dicke der epitaxierten Schicht lokale Unterschiede aufweist. Die inhomogene Abscheidung von Material wird durch lokale Variation der die Abscheiderate bestimmenden Parameter oder durch Verwendung von Blenden oder Abdeckungen über dem Substrat beeinflußt. Die Form der Strukturen wird über die lokale Verteilung der Parametervariationen und durch die davon abhängende Abscheiderate bestimmt.

Die Abscheideraten hängen je nach betrachteten Abscheideverfahren von verschiedenen Parametern ab. Bei CVD-Verfahren bestimmen insbesondere die Temperatur und der Gasdruck die Abscheiderate. Im Fall der Epitaxie sind es vor allem die Temperatur, der Gasfluss, die verwendeten Abscheidegase und ihre Konzentration und die Anordnung der Substratscheibe im Abscheidereaktor. Bei der elektrolytischen Abscheidung hängt die Abscheiderate insbesondere von der Temperatur, der angelegten elektrischen Spannung und vom Widerstand des Substrates ab. Bei der Plasmabeschichtung spielen die Temperatur und die wirkenden elektrischen und magnetischen Felder die entscheidende Rolle.

Die Erfindung wird nachfolgend am Beispiel der besonders bevorzugten epitaktischen Abscheidung von Silicium auf einer Halbleiterscheibe aus Silicium eingehender beschrieben. Dabei wird auch auf Figuren Bezug genommen.
Figur 1 zeigt schematisch einen Epitaxiereaktor mit einer Substratscheibe, die auf einem Suszeptor liegt.
Figur 2 zeigt in Aufsicht einen Suszeptor mit Merkmalen einer Ausführungsform der Erfindung.
Figur 3 ist eine Schnittdarstellung von Figur 2.
Figur 4 zeigt in Aufsicht eine auf einer Substratscheibe abgeschiedene epitaktische Schicht mit Strukturen, die bei Verwendung eines Suszeptors gemäß Figur 2 erhalten wird.
Figur 5 ist eine Schnittdarstellung von Figur 4.
Figur 6 zeigt in Aufsicht die Abbildung einer abgeschiedenen Struktur vermessen mit einem Nanotopographie-Meßsystem.
In Figur 7 sind die Querschnitte erfindungsgemäß erzeugter Strukturen graphisch dargestellt.

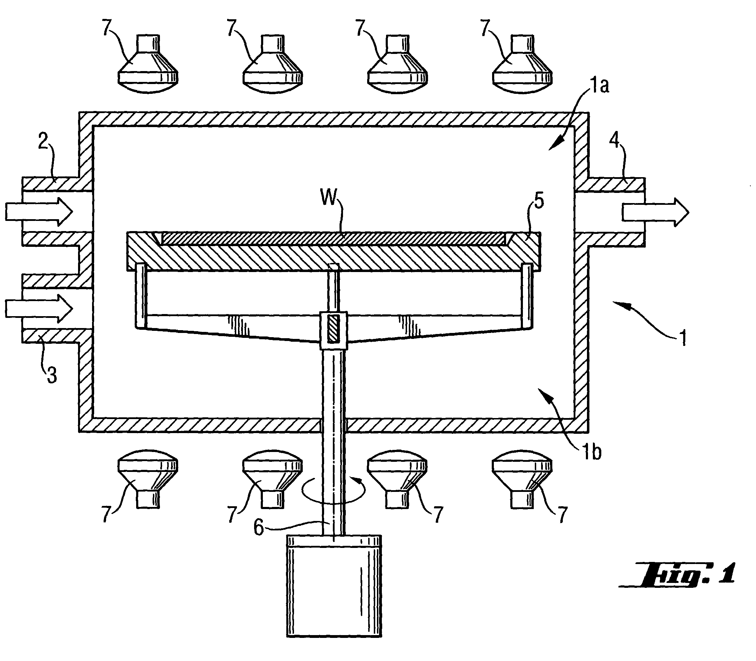

Es wurde bereits dargelegt, daß im Fall der Siliciumepitaxie auf einem Siliciumsubstrat insbesondere die Temperatur des Substrates ein die Abscheiderate bestimmender Parameter ist. Temperaturgradienten auf dem Substrat bzw. innerhalb des Substrates oder der Substratumgebung führen zu lokal unterschiedlichen Dicken in der abgeschiedenen Schicht. Figur 1 zeigt schematisch einen Epitaxiereaktor 1 mit einer Substratscheibe W, die auf einem Suszeptor 5 liegt. Ein solcher Epitaxiereaktor ist typisch und beispielsweise in der EP-953 659 A2 offenbart. Die Epitaxiekammer 1 besteht üblicherweise aus Quarz und ist durch den Suszeptor 5 in einen oberen Kammerbereich 1a und einen unteren Kammerbereich 1b getrennt. Der Reaktor 1 verfügt des weiteren über Gaseinlaßrohre 2 und 3 und ein Gasauslaßrohr 4 und wird beispielsweise über Infrarotlampen 7, die über und unter dem Suszeptor angeordnet sind, geheizt. Dabei erfolgt die Energiezufuhr zur oberen Seite des Substrates durch Strahlung und zur unteren Seite des Substrates durch Wärmeleitung. Der Suszeptor 5 ruht auf einem drehbaren Halter 6.

Erfindungsgemäß wird die lokale Temperatur des Substrates gezielt beeinflußt und auf diese Weise die lokale Dicke der Epitaxieschicht vorgegeben. Ein lokaler Temperaturgradient kann sowohl durch Unterschiede zwischen der von oben und unten zugeführten Strahlungsenergie als auch durch Verwendung von Suszeptoren mit Bereichen mit unterschiedlicher Wärmeleitfähigkeit, unterschiedlichem Abstrahlverhalten oder beidem erzeugt werden. Eine Kombination der genannten Möglichkeiten kann auch realisiert werden.

Gemäß einer Ausführungsform der Erfindung wird das Abstrahlverhalten bzw. die Wärmeübertragung des Suszeptors durch lokal unterschiedliche Oberflächenbehandlungen wie Politur, Aufrauhung oder Verspiegelung variiert.

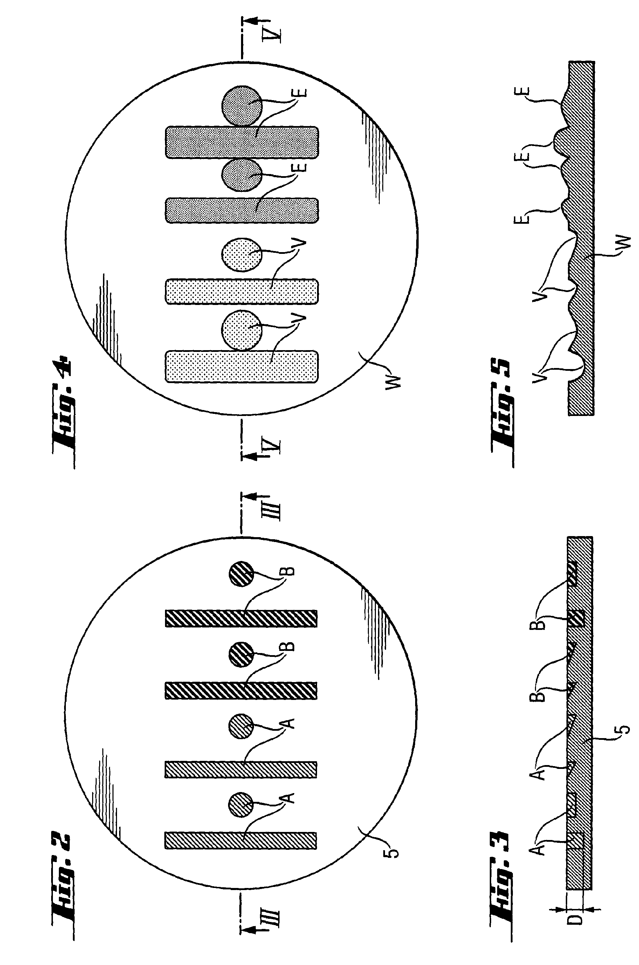

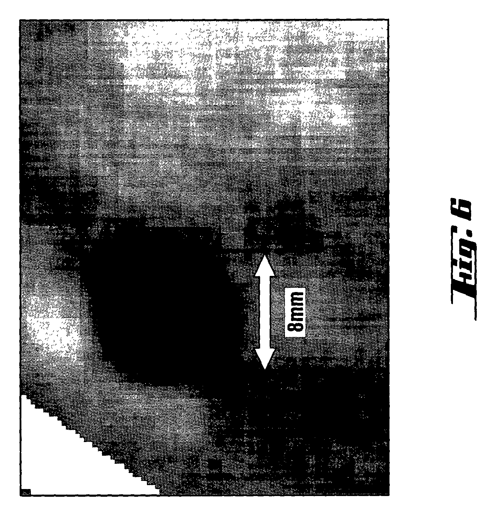

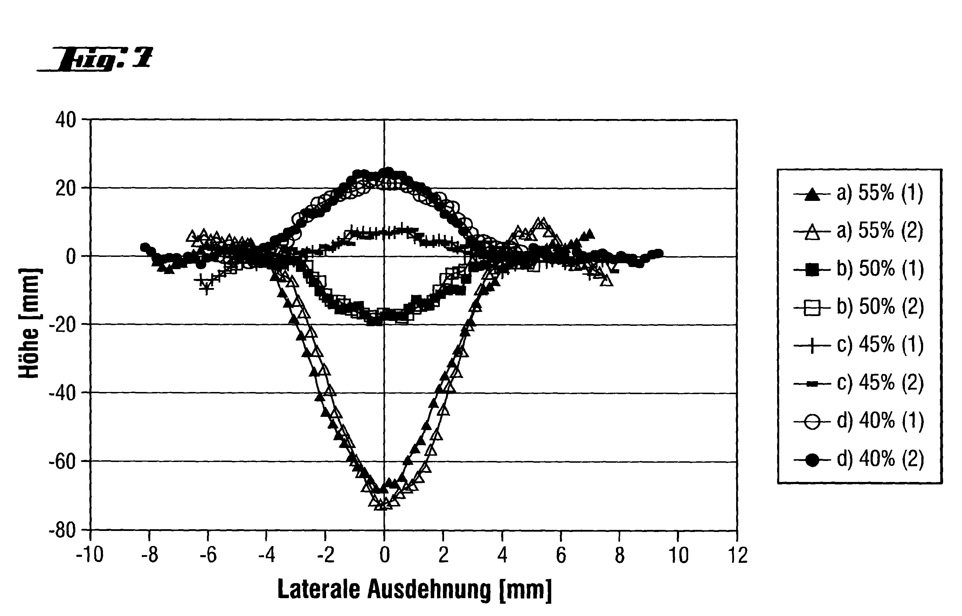

Gemäß einer weiteren Ausführungsform der Erfindung werden lokale Variationen in der Wärmeübertragung erzielt, indem die Auflagefläche des Suszeptors mit Vertiefungen oder Erhebungen versehen wird. Methoden zur Herstellung der Vertiefungen oder Erhebungen können insbesondere sein: Bohren, Sägen, Fräsen, Ätzen, Laserablation. Die Wärmeübertragung auf das auf dem Suszeptor liegende Substrat wird durch die geometrische Form der Vertiefung oder Erhebung beeinflusst. In den Figuren 2 und 3 ist ein Suszeptor 5 dargestellt, in dessen Oberfläche Vertiefungen mit einer Tiefe D eingearbeitet sind. Der mit Material A und Material B bezeichnete Inhalt der Vertiefungen ist in diesem Fall die Umgebungsatmosphäre. Die Tiefe D und die laterale Ausdehnung der Vertiefungen beeinflussen den Temperaturgradienten am Substrat und somit die Form der epitaktisch aufgebrachten Strukturen. In den Figuren 4 und 5 ist die auf dem Substrat abgeschiedene Schicht und ihre durch die Beschaffenheit des Suszeptors verursachte Strukturierung gezeigt. Es wird deutlich, daß durch die Erfindung Substrate zugänglich sind, die reproduzierbare Strukturen tragen, deren geometrische Formen und Profile, wie Höhen, Breiten und Längen vorbestimmt werden können. So führt eine kreisrunde Vertiefung im Suszeptor zu einer kreisrunden Struktur auf dem durch Beschichten erhaltenen Standard und eine längliche Vertiefung zu einer länglichen Struktur. Die Dicke D der Vertiefung im Suszeptor beeinflusst die vertikale Ausdehnung der entsprechenden nanotopographischen Struktur auf dem Standard. Die Figuren 4 und 5 machen auch deutlich, daß eine Vertiefung im Suszeptor nicht notwendigerweise zu einer Vertiefung V in der abgeschiedenen Schicht führen muß, sondern auch eine Struktur in Form einer Erhebung E bewirken kann. Dies wird dadurch möglich, daß wie bereits erwähnt, weitere Maßnahmen neben der Bereitstellung der Vertiefung im Suszeptor kombiniert werden, beispielsweise indem die Vertiefung im Suszeptor verspiegelt wird oder die Strahlungswärme von oben und unten in unterschiedlicher Intensität zugeführt wird. Ist beispielsweise an der Stelle der Vertiefung im Suszeptor die Wärmeabfuhr geringer als in der Umgebung der Vertiefung, ist die Abscheiderate an der Stelle des Substrats erhöht, unter der sich die Vertiefung im Suszeptor befindet.

Gemäß einer weiteren Ausführungsform der Erfindung werden lokale Variationen in der Wärmeübertragung erzielt, indem Eigenschaften wie Wärmeleitfähigkeit und Abstrahlverhalten und deren Materialabhängigkeit ausgenutzt wird. So kann durch Auffüllen der schon erwähnten Vertiefungen im Suszeptor mit einem Material A beziehungsweise einem Material B mit unterschiedlichen Wärmeleitungskoeffizienten ein Suszeptor präpariert werden, durch den während einer Epitaxiefahrt an einer Stelle des Substrates ein positiver und an einer anderen Stelle des Substrats ein negativer Temperaturgradient herbeigeführt werden. Auf diese Weise sind Erhebungen und Vertiefungen auf einem Substrat ebenfalls erhältlich. Das Auffüllen der Vertiefungen geschieht beispielsweise durch Presspassung oder Beschichten. Als Füllstoffe für Vertiefungen eignen sich insbesondere SiO₂ SiC, Graphit und Wolfram.

Figur 6 zeigt in Aufsicht die Abbildung einer abgeschiedenen Struktur, die mit einem Nanotopographie-Meßsystem vermessen wurde. Sie wurde gemäß dem nachfolgendem Beispiel als Siliciumstruktur auf einer Halbleiterscheibe aus Silicium in einem Epitaxieverfahren hergestellt.

### Beispiel:

Die Siliciumepitaxie mit SiHCl₃ angereichertem H₂ erfolgte nach einem vorangegangenen H₂ annealing bei einer Temperatur von ca. 1100°C bei einer mittleren Aufwachsrate von ca. 3,5-4 *µ*m/min. Der Epitaxiereaktor verfügte über die in Figur 1 gezeigten Merkmale. Die Kontrolle der Abscheidetemperatur erfolgte durch Messen der Temperatur der Scheibenoberfläche mit einem Pyrometer von oben und durch Regeln der Lampenleistung, wobei das Verhältnis von oberer zu unterer Lampenleistung einstellbar war. Bezeichnet man die Summe der oberen und unteren Lampenleistung die zum Erreichen der Abscheidetemperatur (z.B. 1050-1180 °C, typisch 1100 °C) erforderlich ist mit 100 %, so ist es vorteilhaft, die Leistung zu je etwa 50 % (obere und untere Leistung) aufzuteilen, damit eine gleichmäßige Einstrahlung von oben und unten erreicht wird und die Scheibe gleichmäßig beheizt wird. Es hatte sich in Versuchen gezeigt, dass eine Erhöhung der Lampenleistung von unten unter gleichzeitiger Reduzierung der Lampenleistung von oben (z. B Verhältnis unten 60 %, oben 40 %) eine Situation erzeugt, in welcher der Suszeptor um einige Grad (1-10 °C, typisch 3-5°) wärmer ist als die Scheibe. Dadurch wird z.B. an Stellen von Vertiefungen auf dem Suszeptor die Wärmeübertragung auf die Scheibe geringer, wodurch an dieser Stelle eine kältere Scheibentemperatur entsteht, was wiederum eine geringere Aufwachsrate und damit eine geringere Schichtdicke zur Folge hat. Der im Beispiel verwendete Suszeptor wies an mehreren Positionen eine kreisrunde Vertiefung auf. In Abhängigkeit der Energiezufuhr über die Infrarotlampen wurden auf dem Substrat sowohl kreisrunde Vertiefungen als auch Erhebungen erzeugt. Der Anteil der Gesamtenergiezufuhr durch die unteren Lampen betrug: 55% (Fig.7, a), 50% (Fig.7, b), 45% (Fig.7, c) und 40% (Fig.7, d).

Das Beispiel zeigt, dass die Höhen bzw. Tiefen der erzeugten Strukturen über die Lampeneinstrahlung gesteuert werden können. Der Durchmesser der Strukturen kann dagegen über den Durchmesser der Vertiefung im Suszeptor eingestellt werden. In Fig.7 sind Schnitte durch jeweils zwei Strukturen ((1), (2)), die beim gleichem Prozess an unterschiedlichen Positionen des Substrates aufgebracht wurden, dargestellt. Die sehr hohe Vergleichbarkeit der Schnitte verdeutlicht die Homogenität des Prozesses bzw. dessen Reproduzierbarkeit.

Die Erfindung stellt damit Standards und Prüfnormale für Oberflächentopographie in der Wafer-, CD-, Disk-, Glas- und optischen Industrie zur Verfügung. Die Standards können neben der Nanoptopographie auch in der Geometriemessung eingesetzt werden.

## Patentansprüche

1. Standard zum Kalibrieren und Überprüfen eines Nanotopographie-Geräts, umfassend ein Substrat und mindestens eine auf dem Substrat abgeschiedene Struktur mit einer lateralen Ausdehnung von 0,5 bis 20 mm und einer vertikalen Ausdehnung von 5 bis 500 nm, die von Flanken begrenzt ist, die eine Steigung von höchstens 1*10⁻³ aufweisen.

2. Standard nach Anspruch 1, wobei das Substrat aus einem Material besteht, das ausgewählt ist aus einer Gruppe von Stoffen, die Silicium, Galliumarsenid, Glas, Siliciumcarbid und Siliciumdioxid umfaßt.

3. Standard nach Anspruch 1 oder Anspruch 2, wobei die Struktur aus einem Material besteht, das ausgewählt ist aus einer Gruppe von Stoffen, die Silicium, Galliumarsenid, Germanium, Kohlenstoff, Aluminium, Kupfer, Gold, Silber, Siliciumdioxid, Siliciumnidrid, Wolframsilicid und Mischungen der genannten Stoffe umfaßt.

4. Standard nach einem der Ansprüche 1 bis 3, wobei die Struktur eine Erhebung in einer ebenen Umgebung ist.

5. Standard nach einem der Ansprüche 1 bis 3, wobei die Struktur eine Vertiefung in einer ebenen Umgebung ist.

6. Standard nach einem der Ansprüche 1 bis 5, wobei die Struktur eine symmetrische Form aufweist.

7. Standard nach einem der Ansprüche 1 bis 5, wobei die Struktur eine asymmetrische Form aufweist.

8. Verfahren zur Herstellung eines Standards zum Kalibrieren und Überprüfen eines Nanotopographie-Geräts durch Abscheiden mindestens einer Struktur auf einem Substrat, die eine laterale Ausdehnung von 0,5 bis 20 mm und eine vertikale Ausdehnung von 5 bis 500 nm besitzt und von Flanken begrenzt ist, die eine Steigung von höchstens 1*10⁻³ aufweisen, wobei Material mit einer inhomogenen Abscheiderate auf dem Substrat abgeschieden wird.

9. Verfahren nach Anspruch 8, wobei die inhomogene Abscheiderate durch eine lokale Variation mindestens eines Parameters erreicht wird, der aus einer Gruppe ausgewählt ist, der die Temperatur , den Gasdruck, den Gasfluß, die Gasart, die Gaskonzentration, die elektrische Spannung und die Stärke von elektrischen und magnetischen Feldern umfaßt.

10. Verfahren nach Anspruch 8 oder Anspruch 9, wobei eine Abscheidemethode eingesetzt wird, die aus einer Gruppe ausgewählt ist, die CVD (chemical vapour deposition), elektrolytische Abscheidung, Plasmabeschichtung, Aufdampfen und Epitaxie umfaßt.

11. Verfahren nach einem der Ansprüche 8 bis 10, wobei die Struktur epitaktisch abgeschieden wird, und das Substrat über einem Suszeptor angeordnet ist, der in einem Oberflächenbereich lokal unterschiedlich bearbeitet worden ist.

12. Verfahren nach Anspruch 11, wobei der Suszeptor im Oberflächenbereich lokal mit einer Vertiefung versehen worden ist.

13. Verfahren nach Anspruch 12, wobei die Vertiefung mit einem substratfremden Material gefüllt worden ist.

14. Verfahren nach Anspruch 11, wobei das Substrat im Oberflächenbereich lokal mit einer Erhebung versehen worden ist.

15. Verfahren nach Anspruch 11, wobei der Suszeptor im Oberflächenbereich lokal unterschiedlich poliert worden ist.

16. Verfahren nach Anspruch 11, wobei der Suszeptor im Oberflächenbereich lokal unterschiedlich aufgerauht worden ist.

17. Verfahren nach Anspruch 11, wobei der Suszeptor im Oberflächenbereich lokal unterschiedlich verspiegelt worden ist.

18. Verfahren nach Anspruch 11, wobei der Suszeptor im Oberflächenbereich lokal unterschiedlich geschwärzt worden ist.
